# EUROPÄISCHE PATENTSCHRIFT

(11) **EP 4 048 916 B1**
(45) Veröffentlichungstag und Bekanntmachung des Hinweises auf die Patenterteilung: **06.12.2023**
(21) Anmeldenummer: 20786457.0
(22) Anmeldetag: 01.10.2020
(51) Int. Cl.: F16D 65/18, F16D 59/02

(54) **BREMSANORDNUNG UND ELEKTROMOTOR MIT EINER BREMSANORDNUNG**
BRAKE ASSEMBLY AND ELECTRIC MOTOR COMPRISING A BRAKE ASSEMBLY
ENSEMBLE FREIN ET MOTEUR ÉLECTRIQUE COMPRENANT UN ENSEMBLE FREIN

(30) Priorität: 22.10.2019 DE 102019007339
(43) Veröffentlichungstag der Anmeldung: 31.08.2022
(73) Patentinhaber: SEW-EURODRIVE GmbH & Co. KG, 76646 Bruchsal (DE)
(72) Erfinder: SCHWARZ, Martin, 74653 Ingelfingen (DE); ESSERT, Steffen, 76646 Bruchsal (DE); WOLF, Tanja, 76646 Bruchsal (DE)
(86) Internationale Anmeldenummer: PCT/EP2020/025445
(87) Internationale Veröffentlichungsnummer: WO 2021/078403

(56) Entgegenhaltungen:
- CN-A- 102 767 582
- DE-A1-102006 040 438
- DE-A1-102015 117 681

## Beschreibung

Die Erfindung betrifft eine Bremsanordnung und einen Elektromotor mit einer Bremsanordnung.

**Aus der** CN 102 767 582 A **ist als nächstliegender Stand der Technik** eine Bremsanordnung zum Abbremsen einer drehenden Welle bekannt.

**Aus der** DE 10 2015 117681 A1 **ist eine Bremse mit einer Notlüfteinrichtung bekannt.**

**Aus der** DE 10 2006 040438 A1 **ist eine arretierbare Handlüftung für eine Bremse bekannt.**

Die Erfindung liegt daher die Aufgabe zugrunde, eine Vorrichtung und ein Verfahren weiterzubilden, wobei zuverlässig im Betrieb und gleichzeitig kosteneffizient im Herstellungsprozess ist.

Erfindungsgemäß wird die Aufgabe bei der Bremsanordnung nach den in Anspruch 1 und bei dem Elektromotor nach den in Anspruch **14** angegebenen Merkmalen gelöst.

Wichtige Merkmale der Erfindung bei der Bremsanordnung zum Abbremsen einer Welle, insbesondere Rotorwelle eines Elektromotors, sind, dass die Bremsanordnung eine Ankerscheibe aufweist, welche, drehfest aber axial bewegbar, mit einem Magnetkörper der Bremsanordnung verbunden ist,
wobei die Bremsanordnung einen Rollenträger und eine Kurvenscheibe aufweist,
wobei am Rollenträger Rollen drehbar gelagert sind, welche auf Steuerflächen der Kurvenscheibe abrollbar sind,
wobei ein an der von der Ankerscheibe abgewandten Seite des Rollenträgers am Rollenträger abgestütztes, über einen ersten Gleitring abgestütztes, Begrenzungsteil als axiale Begrenzung der Ankerscheibe fungiert, an der vom Rollenträger abgewandten Seite der Ankerscheibe abstützbar ist, über einen zweiten Gleitring abstützbar ist,
wobei die Kurvenscheibe zwischen dem Rollenträger und dem Magnetkörper angeordnet ist.

Von Vorteil ist dabei, dass die Rollen in einfacher Weise am Rollenträger gelagert sind. Insbesondere sind Bolzen in ein durch eine die jeweilige Rolle aufnehmende Ausnehmung des Rollenträgers unterbrochenes Rundloch - insbesondere beidseitig der Ausnehmung - eingesteckt, so dass die Rolle auf dem Bolzen drehbar gelagert ist. Die Welle ragt durch den Magnetkörper, die Kurvenscheibe, den Rollenträger und die Ankerscheibe hindurch. Die Kurvenscheibe und der Rollenträger weisen einen Zentrierkragen auf, der auch als eine Drehlagerung fungiert. Auf diese Weise ist also der Rollenträger relativ zur Kurvenscheibe drehbar gelagert, wobei die Kurvenscheibe mit dem Magnetkörper lösbar verbunden ist. Vorzugsweise ragt der Zentrierkragen des Rollenträgers in den als Hohlzylinderteil ausgeführten Zentrierkragen. Somit ist dann die Drehung des Rollenträgers relativ zur Kurvenscheibe ausführbar, indem der Rollenträger drehgelagert ist in der Kurvenscheibe, welche mit dem Magnetkörper verbunden ist, insbesondere drehfest verbunden ist.

Mittels der Steuerflächen ist der axiale Hub als Funktion des Drehwinkels des Rollenträgers vorgebbar. Die Steuerflächen sind weisen einen axialen Positionsverlauf für das Abrollen der Rollen auf, welcher vom Umfangswinkel abhängt.

Somit ist das am Rollenträger abgestützte Begrenzungsteil von dem Rollenträger mitnehmbar und definiert den maximalen Abstand zwischen Rollenträger und Ankerscheibe. Der Arbeitshub der Ankerscheibe ist also nur dann vom Begrenzungsteil ungehindert ausführbar, wenn der Rollenträger möglichst nahe am Magnetkörper angeordnet ist. Das Begrenzungsteil ist durch Ausnehmungen des Magnetkörpers geführt und somit in Umfangsrichtung fest, insbesondere also drehfest, angeordnet. Denn die Ankerscheibe ist ebenfalls drehfest zum Magnetkörper angeordnet, wenn auch axial bewegbar. Auf diese Weise ist also mittels Drehbewegung des Rollenträgers die Ankerscheibe zum Magnetkörper hin bewegbar, insbesondere entgegen der von am Magnetkörper abgestützten Federelementen erzeugten Federkraft und somit die Bremse manuell durch Drehbewegen des Rollenträgers, insbesondere mittels Betätigung eines mit dem Rollenträger verbundenen Hebelteils, lüftbar.

Bei einer vorteilhaften Ausgestaltung weist die Kurvenscheibe im Bereich der Steuerflächen eine axiale Dicke oder Oberflächenposition auf, welche an unterschiedlichen Umfangswinkelpositionen unterschiedliche Werte, insbesondere unterschiedliche axiale Positionen, aufweist,
wobei die axiale Dicke oder Oberflächenposition mit, ausgehenc von einer ersten Umfangswinkelposition, insbesondere Gleichgewichtsposition, zunehmendem Umfangswinkel veränderlich ist, zunimmt oder abnimmt. Vor Vorteil ist dabei, dass durch die Formgebung der Steuerflächen der Kurvenscheibe der Verlauf der axialen Begrenzung der Ankerscheibe in Abhängigkeit von dem Drehwinkel des Rollenträgers vorgebbar ist. Somit ist von einer Gleichgewichts- oder Ruheposition aus ein bei gleichförmiger Drehbewegung des Rollenträgers anfänglich langsames axiales Ansteigen und nachfolgend schnelleres axiales Ansteigen bewirkbar, wobei ein Einrasten des Rollenträgers durch eine sich am Ende des Verlaufs anschließenden Mulde bewirkbar ist.

Die Steuerflächen steigen also in axialer Richtung zunächst gering, also mit einer ersten in Umfangsrichtung gemessenen Steigung, an und danach steiler, also mit einer zweiten in Umfangsrichtung gemessenen Steigung, welche betragsmäßig größer ist als die erste Steigung. An den Bereich der zweiten Steigung schließt sich dann am Ende die Mulde an, also ein Bereich mit einem lokalen Minimum, insbesondere wobei die axiale Position des Tiefpunktes der Mulde axial beabstandet ist von der zur Gleichgewichts- oder Ruheposition gehörigen axialen Position der Steuerfläche. Der Krümmungsradius der Mulde ist dabei vorzugswiese größer als der Außenradius der Rollen, so dass die Rollen den jeweiligen Tiefpunkt der Mulde berühren können.

Bei einer vorteilhaften Ausgestaltung nimmt die axiale Dicke oder Oberflächenposition mit zunehmendem Umfangswinkel, insbesondere ausgehend von einer Gleichgewichtsposition, in einem ersten Umfangswinkelbereich und in einem sich an den ersten Umfangswinkelbereich anschließenden zweiten Umfangswinkelbereich zunächst zu und ein dritter Umfangswinkelbereich, welcher sich an den zweiten Umfangswinkelbereich anschließt, weist ein lokales Minimum auf, insbesondere also einen Bereich der Abnahme und daran sich anschließenden Bereich der Zunahme,
wobei die Zunahme in dem ersten Umfangswinkelbereich größer ist als in dem zweiten Umfangswinkelbereich. Von Vorteil ist dabei, dass durch die so vorgesehene Mulde eine Arretierung des Rollenträgers erreichbar ist, obwohl die an dem Magnetkörper abgestützten Federelemente eine zur Ruheposition- oder Gleichgewichtsposition hin gerichtete, also rückstellende Federkraft erzeugen.

Bei einer vorteilhaften Ausgestaltung nimmt die axiale Dicke oder Oberflächenposition mit abnehmendem Umfangswinkel, insbesondere ausgehend von einer Gleichgewichtsposition, in einem vierten Umfangswinkelbereich und in einem sich an den vierten Umfangswinkelbereich anschließenden fünften Umfangswinkelbereich zunächst zu und ein sechster Umfangswinkelbereich, welcher sich an den fünften Umfangswinkelbereich anschließt, weist ein lokales Minimum auf, insbesondere also einen Bereich der Abnahme und daran sich anschließenden Bereich der Zunahme,
wobei die Zunahme in dem vierten Umfangswinkelbereich größer ist als in dem fünften Umfangswinkelbereich. Von Vorteil ist dabei, dass durch die Formgebung der jeweiligen Steuerfläche der axiale Hub des Begrenzungsteils als Funktion des Drehwinkels des Rollenträgers vorgebbar ist.

Bei einer vorteilhaften Ausgestaltung ist ein Hebelteil mit dem Rollenträger verbunden, insbesondere lösbar verbunden ist. Von Vorteil ist dabei, dass nur ein geringer Kraftaufwand beim Drehbewegen notwendig ist.

Bei einer vorteilhaften Ausgestaltung ist ein Seilzug mit dem Rollenträger verbunden, insbesondere zur Betätigung des Rollenträgers, indem ein mit dem Seilzug verbundener, an einer den Lüfter umgebenden Lüfterhaube schwenkbar gelagerter Hebel geschwenkt wird. Von Vorteil ist dabei, dass die manuelle Betätigung an einem Ort ausführbar ist, zu dem der Seilzug hin verlegbar ist. Somit ist auch eine Schwenkbewegung des Hebels in einer anderen Ebene als in der auf den Rollenträger bezogenen Tangentialebene ermöglicht.

Von Vorteil ist dabei, dass das Begrenzungsteil in einer ersten axialen Position den axialen Hub der Ankerscheibe nicht begrenzt, in der anderen, also zweiten axialen Position jedoch den Hub der Ankerscheibe im Wesentlichen auf eine axiale Position reduziert. Somit ist das Begrenzungsteil drehfest angeordnet und in einfacher Weise zum Begrenzen des Hubs der Ankerscheibe verwendbar. Die zweite axiale Position entspricht dem gelüfteten Zustand der Bremsanordnung.

Bei einer vorteilhaften Ausgestaltung ist auf der vom Magnetkörper abgewandten Seite des Rollenträgers ein Lüfter angeordnet, welcher drehfest mit der Welle verbunden ist. Von Vorteil ist dabei, dass eine verbesserte Kühlung erreichbar ist, insbesondere nicht nur für das Gehäuse des Elektromotors und die mit dem Gehäuse wärmeleitend verbundene Statorwicklung, sondern auch die Bremsanordnung kühlbar ist.

Bei einer vorteilhaften Ausgestaltung ist eine Spule im Magnetkörper aufgenommen, insbesondere in einer Vertiefung oder Ausnehmung des Magnetkörpers, aufgenommen ist, wobei ein, insbesondere lochscheibenartig ausgeführter, Bremsbelagträger mit der Welle drehfest, aber axial bewegbar verbunden ist,
wobei an dem Magnetkörper abgestützte Federelemente die Ankerscheibe vom Magnetkörper wegdrücken und/oder zum Bremsbelagträger hindrücken, so dass dieser bei nichtbestromter Spule auf eine Bremsfläche des Elektromotors, insbesondere auf eine an einem Lagerschild des Elektromotors ausgebildete Bremsfläche, gedrückt wird,
wobei bei bestromter Spule die Ankerscheibe entgegen der Federkraft der Federelemente zum Magnetkörper hingezogen wird. Von Vorteil ist dabei, dass bei Stromausfall die Bremse einfällt und nur bei Bestromung der Spule die Bremse lüftbar ist. Unabhängig von der Bestromung oder Nicht-Bestromung ist aber durch Drehen des Rollenträgers die Bremsanordnung lüftbar.

Bei einer vorteilhaften Ausgestaltung ist die Ankerscheibe aus einem ferromagnetischen Material gefertigt, insbesondere aus Stahl. Von Vorteil ist dabei, dass die Ankerscheibe von der Spule angezogen werden kann.

Bei einer vorteilhaften Ausgestaltung sind insbesondere axial ausgerichtete Bolzen im oder am Magnetkörper befestigt, welche durch eine Ausnehmung der Ankerscheibe durchgeführt sind, insbesondere so, dass die Ankerscheibe in axialer Richtung an den Bolzen entlang hinund herbewegbar ist. Von Vorteil ist dabei, dass die Ankerscheibe zum Magnetkörper drehfest ausgerichtet ist.

Bei einer vorteilhaften Ausgestaltung ragt das Begrenzungsteil durch ein in Umfangsrichtung sich erstreckendes Langloch des Rollenträgers hindurch,
wobei das Begrenzungsteil durch ein Rundloch der Kurvenscheibe und des Magnetkörpers hindurchragt,
wobei die Kurvenscheibe lösbar verbunden ist mit dem Magnetkörper oder zumindest mittels des Begrenzungsteils in Umfangsrichtung formschlüssig verbunden ist mit dem Magnetkörper. Von Vorteil ist dabei, dass der Rollenträger ein Langloch aufweist, so dass das Begrenzungsteil am Rand des Langlochs abstützbar ist und das Langloch sich in Umfangsrichtung erstreckt, so dass beim Drehbewegen des Rollenträgers das Begrenzungsteil entlang des Langlochs gleitet, wobei das Begrenzungsteil relativ zum Magnetkörper in Umfangsrichtung ortsfest ist und der Rollenträger relativ zum Magnetkörper gedreht wird.

Bei einer vorteilhaften Ausgestaltung sind die Drehachsen der Rollen radial ausgerichtet. Von Vorteil ist dabei, dass die Rollrichtung der Rollen tangential gerichtet ist.

Bei einer vorteilhaften Ausgestaltung sind der erste und der zweite Gleitring aus Kunststoff gefertigt. Von Vorteil ist dabei, dass der Rollenträger aus Stahl gefertigt ist und somit geringe Reibleistung bei der Drehbewegung entsteht.

Bei einer vorteilhaften Ausgestaltung ragt zumindest ein in eine Gewindebohrung des Magnetkörpers eingeschraubtes Schraubteil durch die Kurvenscheibe und das Langloch des Rollenträgers hindurch und eine Rückstellfeder drückt den Rollenträger zur Kurvenscheibe und somit zum Magnetköper hin, wobei die Rückstellfeder abgestützt ist an einer Verbreiterung des Schraubteils, insbesondere am Schraubenkopf des als Schraube ausgeführten Schraubteils oder an einer auf das als Gewindestift ausgeführten Schraubteil aufgeschraubten Mutter,
wodurch die Rollen des Rollenträgers auf jeweilige Steuerflächen der Kurvenscheibe gedrückt sind, die dadurch zum Magnetkörper hingedrückt ist. Von Vorteil ist dabei, dass der Rollenträger zur Kurvenscheibe hingedrückt wird und somit stets in einer definierten Ausrichtung und Position haltbar ist.

Bei einer vorteilhaften Ausgestaltung sind der Rollenträger und die Kurvenscheibe jeweils aus Metall gefertigt und der Magnetkörper aus einem ferromagnetischen Stahlguss. Von Vorteil ist dabei, dass eine einfache kostengünstige Herstellung und ein verschleißarmer reibleistungsarmer Betrieb ausführbar sind.

Bei einer vorteilhaften Ausgestaltung ist ein Lüfter neben der vom Magnetkörper abgewandten Seite des Rollenträgers angeordnet und drehfest mit der Welle verbunden. Von Vorteil ist dabei, dass die Bremsanordnung entwärmbar ist.

Bei einer vorteilhaften Ausgestaltung ist die Welle eine Rotorwelle des Elektromotors. Von Vorteil ist dabei, dass die Bremsanordnung zur Abbremsung eines Elektromotors, insbesondere dessen Rotorwelle, verwendbar ist.

Die Erfindung wird nun anhand von schematischen Abbildungen näher erläutert:

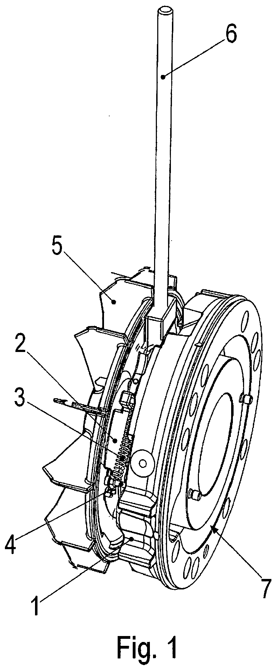

In der Figur 1 ist ein Handlüftbereich einer elektromagnetisch betätigbaren Bremsanordnung in Schrägansicht dargestellt, wobei ein Lüfter 5 neben der Bremsanordnung angeordnet ist.

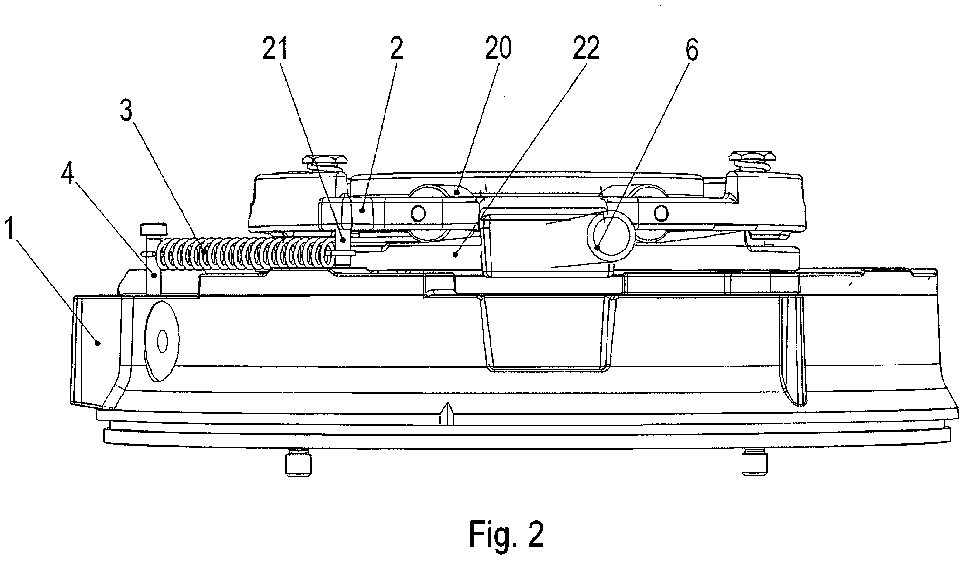

In der Figur 2 ist eine zugehörige Seitenansicht dargestellt, wobei ein Rollenträger 2 zur drehbaren Lagerung von Rollen 20 gezeigt ist, welche auf einer Kurvenscheibe 22 abrollen.

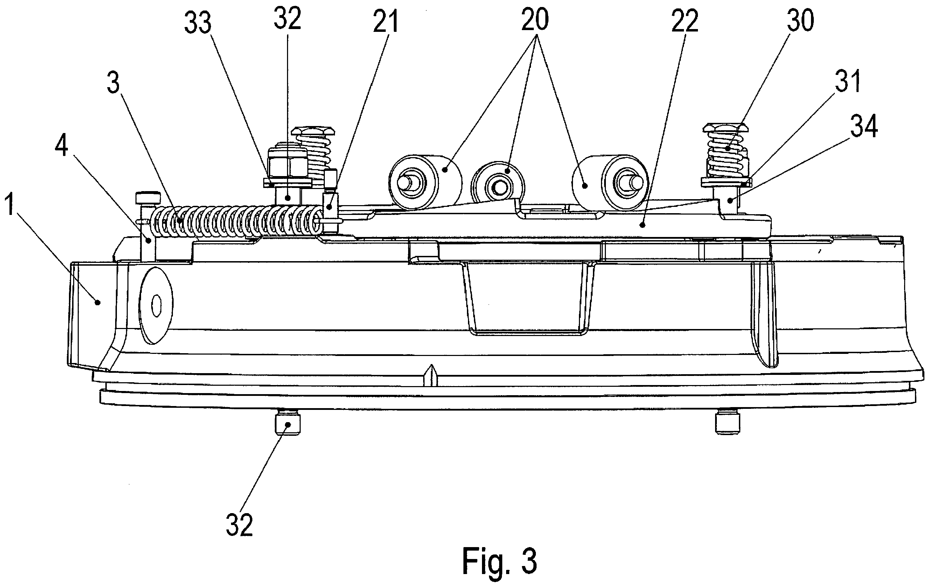

In der Figur 3 ist im Unterschied zur Figur 2 der Rollenträger 2 ausgeblendet.

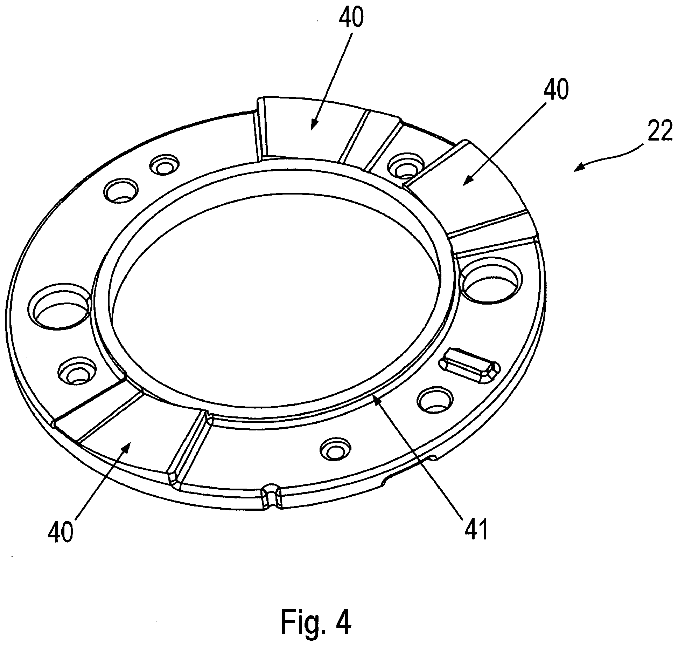

In der Figur 4 ist die Kurvenscheibe 22 in Schrägansicht dargestellt.

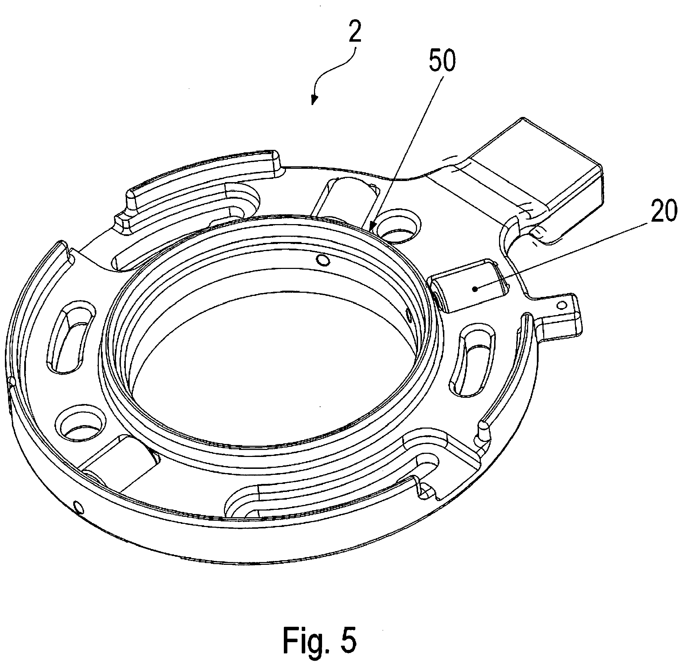

In der Figur 5 ist die Rollenträger 2 in Schrägansicht dargestellt.

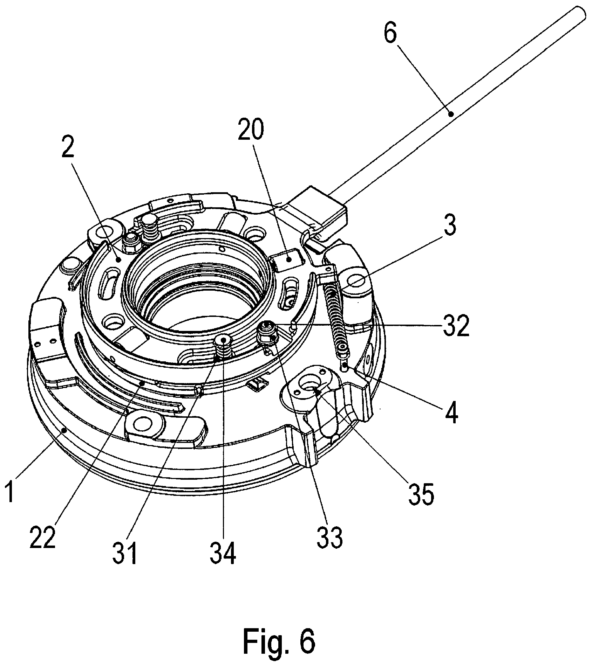

In der Figur 6 ist der Handlüftbereich in Schrägansicht dargestellt, wobei der Lüfter 5 ausgeblendet ist.

Wie in den Figuren gezeigt, weist die Bremsanordnung einen Magnetkörper 1 auf, wobei durch eine im Magnetkörper 1 mittig angeordnete Ausnehmung eine Rotorwelle, die in den Figuren nicht gezeigt ist, durchgeführt ist, welche drehfest mit einem Lüfter 5 verbunden ist, welcher axial, also in Richtung der Drehachse der Rotorwelle, neben dem Magnetkörper 1 angeordnet ist.

Axial zwischen dem Lüfter 5 und dem Magnetkörper ist die Kurvenscheibe 22 und der Rollenträger 2 angeordnet.

Der Stator des Elektromotors ist auf der von dem Rollenträger 2 und von der Kurvenscheibe 22 abgewandten Seite des Magnetkörpers 1 angeordnet.

Im Rollenträger 2 sind axial durchgehende Ausnehmungen ausgebildet, die in Umfangsrichtung voneinander beabstandet sind. Eine jeweilige Rolle 20 ist auf einem jeweiligen Stift 4 gelagert, der jeweils beidseitig der jeweiligen Ausnehmung in ein Bohrloch des Rollenträgers 2 hineinragt. Der Stift 4 ist also in einem durch die jeweilige Ausnehmung unterbrochenen
Bohrloch angeordnet, insbesondere beidseitig der Ausnehmung. Der jeweilige Stift 4 in das Bohrloch vorzugsweise eingepresst und ist radial ausgerichtet, so dass die Drehachse jeder Rolle 20 in radialer Richtung ausgerichtet ist.

Somit sind die Rollen 20 drehbar gelagert am Rollenträger 2.

Der Rollenträger 2 ist mit einem Hebelteil 6 verbunden, insbesondere lösbar verbunden. Somit ist der Rollenträger 2 in Umfangsrichtung mit geringem Kraftaufwand drehbar.

Während der durch das Betätigen des Hebelteils 6 bewirkten Drehung des Rollenträgers 2 in Umfangsrichtung rollen die Rollen 2 auf Steuerflächen 40 der Kurvenscheibe 22 ab. Die axiale Dicke der Kurvenscheibe 22 im Bereich der Steuerflächen 40 ist in Umfangsrichtung nicht konstant, sondern weist einen vom Umfangswinkel abhängigen Verlauf auf, welcher bei der in Umfangsrichtung gerichteten Drehbewegung des Rollenträgers 2 eine axiale Verschiebung des Rollenträgers 2 bewirkt.

Die axiale Dicke ist auch als Wandstärke, insbesondere in axialer Richtung gemessene Wandstärke, bezeichenbar.

Dabei drücken Rückstellfedern 30, insbesondere welche axial gerichtet Federkraft erzeugen, den Rollenträger 2 zum Magnetkörper 1 hin. Somit werden also die Rollen 2 auf die Steuerflächen 40 der Kurvenscheibe 22 gedrückt, die wiederum auf den Magnetkörper 1 gedrückt wird.

Die Rückstellfedern 30 sind jeweils an einem Schraubenkopf einer jeweiligen Schraube 34 abgestützt und drücken mit ihrem vom Schraubenkopf abgewandten Ende nicht direkt auf den Rollenträger 2, sondern auf einen Gleitring 31, der wiederum auf den Rollenträger 2 drückt, insbesondere auf den um das Langloch angeordneten Randbereich des Rollenträgers 2 herum.

Die Schrauben 34 ragen durch die im Rollenträger 2 ausgebildeten, in Umfangsrichtung sich erstreckenden, in Umfangsrichtung voneinander beabstandeten Langlöcher. Die Schrauben 34 sind in Gewindebohrungen des Magnetkörpers 1 eingeschraubt und somit lösbar verbunden mit dem Magnetkörper 1. Wenn also der Rollenträger 2 aus einer Ruheposition oder Gleichgewichtsposition herausgedreht wird, werden die Rückstellfedern 30 zunehmend zusammengedrückt und die von ihnen erzeugte Federkraft nimmt entsprechend zu.

Außerdem sind weitere Gewindestifte oder Schrauben 32 vorgesehen, die durch die Kurvenscheibe 22 hindurchragen und auch durch den Magnetkörper 1 hindurchragen, so dass sie mit ihren Schraubenköpfen oder einer aufgeschraubten Mutter den axialen Freiraum einer Ankerscheibe der Bremsanordnung begrenzen. Die Gewindestifte oder Schrauben 32 sind somit jeweils als Begrenzungsteil wirksam.

Auf die Gewindestifte oder Schrauben 32 ist ein weiterer Gleitring 33 aufgesteckt, so dass bei der Drehbewegung des Rollenträgers 2 der Gleitring 33 die Gewindestifte oder Schrauben 32 axial mitnimmt.

Somit ist bei Drehbewegung des Rollenträgers 2 die axiale Bewegungsfreiheit der Ankerscheibe abhängig von der Drehstellung des Rollenträgers 2 und dem entsprechenden Verlauf der Steuerfläche vorgebbar.

Die Rückstellfedern 30 erzeugen eine in axialer Richtung gerichtete Federkraft.

In einem axial gerichteten Bohrloch des Rollenträgers 2 ist ein Bolzen 21 eingepresst, an welchem ein erstes Ende einer insbesondere tangential ausgerichteten Rückstellfeder 30 befestigt ist. Das andere Ende der Rückstellfeder 30 ist an einem Stift 4 befestigt, welcher in ein axial gerichtetes Bohrloch des Magnetkörpers 1 eingepresst ist. Somit wird eine Drehbewegung, welche die Rollen 20 entlang einer bei zunehmendem Umfangswinkel des Hebelteils 6 in axialer Richtung ansteigenden Steuerfläche 40 führt, umgekehrt, sobald der Bediener das Hebelteil 6 freigibt und somit die Rückstellfeder 30 den Rollenträger 2 zurückdrehen kann.

Die in den Figuren nicht gezeigte Ankerscheibe ist mit dem Magnetkörper 1 drehfest, aber axial bewegbar angeordnet. Hierzu sind im Magnetkörper axial gerichtete Bolzen eingesteckt, welche durch axial durchgehende Ausnehmungen der Ankerscheibe hindurchragen und somit die Ankerscheibe an einer Drehbewegung in Umfangsrichtung hindern. Am Magnetkörper 1 abgestützte Federelemente drücken die Ankerscheibe vom Magnetkörper weg.

In einer auf der vom Lüfter 6 abgewandten Seite des Magnetkörpers 1 angeordneten ringförmigen Ausnehmung 7 des Magnetkörpers 1 ist eine bestrombare Spule angeordnet.

Bei Bestromung der Spule wird die Ankerscheibe entgegen der von den Federelementen erzeugten Federkraft zum Magnetkörper 1 hingezogen.

Bei Nichtbestromung der Spule wird die Ankerscheibe von den Federelementen auf einen Bremsbelagträger gedrückt, welcher drehfest, aber axial bewegbar mit der Rotorwelle verbunden ist. Hierzu weist die Rotorwelle eine Verzahnung auf oder ist mit einer eine Verzahnung aufweisenden Verzahnungsteil drehfest verbunden, wobei der Bremsbelagträger eine Innenverzahnung aufweist, welche im Eingriff ist mit der Verzahnung.

Der Bremsbelagträger wird in diesem unbestromten Fall gegen eine Bremsfläche des Elektromotors gedrückt. Die Bremsfläche ist beispielsweise an einem Lagerschild des Elektromotors vorgesehen, welches ein die Rotorwelle lagerndes Lager aufnimmt.

Der Lüfter 5 ist auf der von der Ankerscheibe in axialer Richtung abgewandten Seite des Magnetkörpers 1 angeordnet. Somit ist mit dem vom Lüfter 5 geförderten Luftstrom nicht nur die Statorwicklung des Elektromotors sondern auch die Bremsanordnung entwärmbar.

Abhängig von der Winkelstellung des Hebelteils 6 ist also der maximale Abstand zwischen der Ankerscheibe und dem Magnetkörper verringerbar. Auf diese Weise ist ein Lüften der Bremse auch im stromlosen Fall ermöglicht, indem der Bediener das Hebelteil 6 in Umfangsrichtung dreht. In diesem Fall drücken jedoch die Federelemente die Ankerscheibe weg vom Magnetkörper 1 und somit wird der Rollenträger 2 auch hierdurch über die in ihm gelagerten Rollen 20 an die Kurvenscheibe 22 angedrückt.

Die Rollen 20 sind vorzugsweise aus Kunststoff gefertigt, wobei die Kurvenscheibe 22 aus Metall, insbesondere Stahl, gefertigt ist. Somit ist eine geringe Reibung erreichbar.

Das Federteil 3 erstreckt sich im Wesentlichen tangential, insbesondere also in einer auf die Welle, insbesondere Rotorwelle, bezogenen Tangentialrichtung.

Die vom Federteil 3 erzeugte Federkraft ist also tangential gerichtet.

Die Kurvenscheibe 22 weist einen Zentrierkragen 41 auf und der Rollenträger 2 weist einen Zentrierkragen 50 auf. Über diese Zentrierkragen (41, 50) ist eine Zentrierung zur Drehachse der Rotorwelle hin ermöglicht, insbesondere wobei Querkräfte ableitbar sind.

Bei weiteren erfindungsgemäßen Ausführungsbeispielen sind die Gewindestifte oder Schrauben 32mit ihrem ersten Ende mit der Ankerscheibe lösbar verbunden, insbesondere in eine jeweilige Gewindebohrung der Ankerscheibe eingeschraubt. Wenn also der Rollenträger 2 in der Ruhelage oder Gleichgewichtslage angeordnet ist, werden die Gewindestifte oder Schrauben 32 beim Hub der Ankerscheibe mitbewegt. Wenn jedoch der Rollenträger 2 gedreht wird und somit die Rollen auf den Steuerflächen 40 abrollen und in einer anderen axialen Position enden, werden die Gewindestifte oder Schrauben 32, also Begrenzungsteile, vom Magnetkörper weiter weggezogen und der Hub der Ankerscheibe begrenzt. Auf diese Weise ist durch Drehen des Rollenträgers 2 eine manuell betätigte Handlüftung ausführbar.

Bei weiteren erfindungsgemäßen Ausführungsbeispielen wird statt der Rückstellfeder 30 eine andere Federanordnung vorgesehen.

Bei weiteren erfindungsgemäßen Ausführungsbeispielen wird das Federteil 3 derart ausgeführt, dass Auslenkungen des Rollenträgers 2 in und entgegen der Umfangsrichtung aus der Ruheposition oder Gleichgewichtsposition von dem Federteil 3 rückstellbar sind, indem die Federkraft nur vom Betrag der Auslenkung aus einem Gleichgewichtspunkt abhängig macht. Beispielsweise ist in diesem Fall der Stift 4 nicht mit dem Endbereich, sondern mittig mit dem Federteil 3 verbunden, das entweder einteilig oder mehrteilig ausgeführt ist. Die Steuerflächen 40 sind dann ebenfalls in Umfangsrichtung symmetrisch um die Ruheposition oder Gleichgewichtposition herum geformt. Beispielsweise ist dann nach einem erst steileren und danach weniger steileren Anstieg der Steuerflächen in Umfangsrichtung eine Mulde ausgebildet und ebenso nach einem erst steileren und danach weniger steilen Anstieg der Steuerflächen entgegen der Umfangsrichtung ebenfalls eine Mulde ausgebildet.

Bei weiteren erfindungsgemäßen Ausführungsbeispielen wird zusätzlich zum Hebelteil 6 oder statt des Hebelteils 6 ein Seilzug am Rollenträger 2 befestigt, welcher eine tangential gerichtete Zugkraft auf den Rollenträger 2 übertragbar macht und wobei der Seilzug mit einem am Gehäuse des Elektromotors und/oder an einer mit dem Gehäuse des Elektromotors verbundenen Lüfterhaube drehbar gelagert ist, welche den Lüfter 5 umgibt.

Bei weiteren erfindungsgemäßen Ausführungsbeispielen ist das Federteil 3 als Ringfeder ausgeführt, welche sich über mehr als 180°, insbesondere mehr 360°, in Umfangsrichtung um die Welle, insbesondere Rotorwelle, erstreckt.

### Bezugszeichenliste

1 Magnetkörper
2 Rollenträger
3 Federteil, insbesondere Ringfeder
4 Stift
5 Lüfter
6 Hebelteil
7 ringförmige Ausnehmung für Spule der Bremsanordnung
20 Rolle
21 Bolzen
22 Kurvenscheibe
30 Rückstellfeder
31 Gleitring
32 Schraube
33 Gleitring
34 Schraube
40 Steuerflächen
41 Zentrierkragen
50 Zentrierkragen

## Patentansprüche

1. Bremsanordnung zum Abbremsen einer Welle, insbesondere Rotorwelle eines Elektromotors,
wobei die Bremsanordnung eine Ankerscheibe aufweist, welche, drehfest aber axial bewegbar, mit einem Magnetkörper (1) der Bremsanordnung verbunden ist, **wobei** die Bremsanordnung einen Rollenträger (2) und eine Kurvenscheibe (22) aufweist,
wobei am Rollenträger (2) Rollen (20) drehbar gelagert sind, welche auf Steuerflächen (40) der Kurvenscheibe (22) abrollbar sind,
wobei ein an der von der Ankerscheibe abgewandten Seite des Rollenträgers (2) am Rollenträger (2) abgestütztes, über einen ersten Gleitring abgestütztes, Begrenzungsteil als axiale Begrenzung der Ankerscheibe fungiert, an der vom Rollenträger (2) und/oder Magnetkörper (1) abgewandten Seite der Ankerscheibe abstützbar ist, insbesondere über einen zweiten Gleitring (33) abstützbar ist,
wobei die Kurvenscheibe zwischen dem Rollenträger (2) und dem Magnetkörpe (1) angeordnet ist,
**dadurch gekennzeichnet, dass**
**das Begrenzungsteil, Schraube** (32) **oder Gewindestift,**
- **eine erste Verbreiterung,** am **Schraubenkopf oder auf einen Gewindebereich des Begrenzungsteils aufgeschraubte Mutter, aufweist, wobei die erste Verbreiterung an der Ankerscheibe abstützbar ist, auf der vom Magnetkörper** (1) **abgewandten Seite der Ankerscheibe, und**
- **eine zweite Verbreiterung,** am **Schraubenkopf oder auf einen Gewindebereich des Begrenzungsteils aufgeschraubte Mutter, aufweist, wobei die zweite Verbreiterung am Rollenträger** (2) **abstützbar ist, auf der vom Magnetkörper** (1) **abgewandten Seite des** Rollenträgers (2).

2. Bremsanordnung nach Anspruch 1,
**dadurch gekennzeichnet, dass**
die Kurvenscheibe (22) im Bereich der Steuerflächen (40) eine axiale Dicke, insbesondere Wandstärke, oder Oberflächenposition aufweist, welche an unterschiedlichen Umfangswinkelpositionen unterschiedliche Werte, insbesondere unterschiedliche axiale Positionen, aufweist,
wobei die axiale Dicke oder Oberflächenposition mit, ausgehend von einer ersten Umfangswinkelposition, insbesondere Gleichgewichtsposition, zunehmendem Umfangswinkel veränderlich ist, zunimmt oder abnimmt.

3. Bremsanordnung nach einem der vorangegangenen Ansprüche,
**dadurch gekennzeichnet, dass**
die axiale Dicke, insbesondere Wandstärke, oder Oberflächenposition mit zunehmendem Umfangswinkel, ausgehend von einer Gleichgewichtsposition, in einem ersten Umfangswinkelbereich und in einem sich an den ersten Umfangswinkelbereich anschließenden zweiten Umfangswinkelbereich zunächst zunimmt und ein dritter Umfangswinkelbereich, welcher sich an den zweiten Umfangswinkelbereich anschließt, ein lokales Minimum aufweist, insbesondere also einen Bereich der Abnahme und daran sich anschließenden Bereich der Zunahme,
wobei die Zunahme in dem ersten Umfangswinkelbereich größer ist als in dem zweiten Umfangswinkelbereich.

4. Bremsanordnung nach einem der vorangegangenen Ansprüche,
**dadurch gekennzeichnet, dass**
die axiale Dicke, insbesondere Wandstärke, oder Oberflächenposition mit abnehmendem Umfangswinkel, ausgehend von einer Gleichgewichtsposition, in einem vierten Umfangswinkelbereich und in einem sich an den vierten Umfangswinkelbereich anschließenden fünften Umfangswinkelbereich zunächst zunimmt und ein sechster Umfangswinkelbereich, welcher sich an den fünften Umfangswinkelbereich anschließt, ein lokales Minimum aufweist, insbesondere also einen Bereich der Abnahme und daran sich anschließenden Bereich der Zunahme,
wobei die Zunahme in dem vierten Umfangswinkelbereich größer ist als in dem fünften Umfangswinkelbereich.

5. Bremsanordnung nach einem der vorangegangenen Ansprüche,
**dadurch gekennzeichnet, dass**
ein Hebelteil (6) mit dem Rollenträger (2) verbunden ist, insbesondere lösbar verbunden ist, und/oder dass
ein Seilzug mit dem Rollenträger (2) verbunden ist, insbesondere zur Betätigung des Rollenträgers, indem ein mit dem Seilzug verbundener, an einer den Lüfter umgebenden Lüfterhaube schwenkbar gelagerter Hebel geschwenkt wird.

6. Bremsanordnung nach einem der Ansprüche 1 bis 5,
**dadurch gekennzeichnet, dass**
das Begrenzungsteil, Schraube (32) oder Gewindestift, mit der Ankerscheibe lösbar verbunden ist, insbesondere in eine Gewindebohrung der Ankerscheibe eingeschraubt ist,
wobei eine Verbreiterung, Schraubenkopf oder auf einen Gewindebereich des Begrenzungsteils aufgeschraubte Mutter, aufweist, wobei die zweite Verbreiterung am Rollenträger (2) über einen Gleitring (33) abstützbar ist, auf der vom Magnetkörper (1) abgewandten Seite des Rollenträgers (2).

7. Bremsanordnung nach einem der vorangegangenen Ansprüche,
**dadurch gekennzeichnet, dass**
auf der vom Magnetkörper (1) abgewandten Seite des Rollenträgers (2) ein Lüfter angeordnet ist, welcher drehfest mit der Welle verbunden ist.

8. Bremsanordnung nach einem der vorangegangenen Ansprüche,
**dadurch gekennzeichnet, dass**
eine Spule im Magnetkörper (1) aufgenommen ist, insbesondere in einer Vertiefung oder Ausnehmung des Magnetkörpers (1), aufgenommen ist,
wobei ein, insbesondere lochscheibenartig ausgeführter, Bremsbelagträger mit der Welle drehfest, aber axial bewegbar verbindbar ist,
wobei an dem Magnetkörper (1) abgestützte Federelemente die Ankerscheibe vom Magnetkörper (1) wegdrücken und/oder zum Bremsbelagträger hindrücken, so dass dieser bei nichtbestromter Spule auf eine Bremsfläche des Elektromotors, auf eine an einem Lagerschild des Elektromotors ausgebildete Bremsfläche, gedrückt wird,
wobei bei bestromter Spule die Ankerscheibe entgegen der Federkraft der Federelemente zum Magnetkörper (1) hingezogen wird.

9. Bremsanordnung nach einem der vorangegangenen Ansprüche,
**dadurch gekennzeichnet, dass**
die Ankerscheibe aus einem ferromagnetischen Material gefertigt ist, insbesondere aus Stahl,
und/oder dass
Bolzen (21), insbesondere axial ausgerichtete Bolzen (21) im oder am Magnetkörper (1) befestigt sind, welche durch eine Ausnehmung der Ankerscheibe durchgeführt sind, so, dass die Ankerscheibe in axialer Richtung an den Bolzen (21) entlang hin- und herbewegbar ist

10. Bremsanordnung nach einem der vorangegangenen Ansprüche,
**dadurch gekennzeichnet, dass**
das Begrenzungsteil durch ein in Umfangsrichtung sich erstreckendes Langloch des Rollenträgers (1) hindurchragt,
wobei das Begrenzungsteil durch ein Rundloch der Kurvenscheibe und des Magnetkörpers (1) hindurchragt,
wobei die Kurvenscheibe lösbar verbunden ist mit dem Magnetkörper (1) oder zumindest mittels des Begrenzungsteils in Umfangsrichtung formschlüssig verbunden ist mit dem Magnetkörper (1).

11. Bremsanordnung nach einem der vorangegangenen Ansprüche,
**dadurch gekennzeichnet, dass**
die Drehachsen der Rollen (20) radial ausgerichtet sind
und/oder dass
der erste und der zweite Gleitring (31) aus Kunststoff gefertigt sind.

12. Bremsanordnung nach einem der vorangegangenen Ansprüche,
**dadurch gekennzeichnet, dass**
zumindest ein in eine Gewindebohrung des Magnetkörpers (1) eingeschraubtes Schraubteil durch die Kurvenscheibe und das Langloch des Rollenträgers hindurchragt und eine Rückstellfeder den Rollenträger zur Kurvenscheibe und somit zum Magnetköper hindrückt,
wobei die Rückstellfeder abgestützt ist an einer Verbreiterung des Schraubteils, insbesondere am Schraubenkopf des als Schraube ausgeführten Schraubteils oder an einer auf das als Gewindestift ausgeführten Schraubteil aufgeschraubten Mutter,
wodurch die Rollen (20) des Rollenträgers (1) auf jeweilige Steuerflächen der Kurvenscheibe gedrückt sind, die dadurch zum Magnetkörper (1) hingedrückt ist.

13. Bremsanordnung nach einem der vorangegangenen Ansprüche,
**dadurch gekennzeichnet, dass**
der Rollenträger (1) und die Kurvenscheibe jeweils aus Metall gefertigt sind und der Magnetkörper (1) aus einem ferromagnetischen Stahlguss.

14. Bremsanordnung nach einem der vorangegangenen Ansprüche,
**dadurch gekennzeichnet, dass**
ein Lüfter (5) neben der vom Magnetkörper (1) abgewandten Seite des Rollenträgers (2) angeordnet ist und drehfest mit der Welle verdindbar ist.

15. Elektromotor mit einer Bremsanordnung nach einem der vorangegangenen Ansprüche,
**dadurch gekennzeichnet, dass**
die Welle eine Rotorwelle des Elektromotors ist.

## Claims

1. A braking arrangement for braking a shaft, in particular rotor shaft of an electric motor,
wherein the braking arrangement has an armature disc which is connected, non-rotatably but axially movably, to a magnet body (1) of the braking arrangement,
wherein the braking arrangement has a roller carrier (2) and a cam disc (22),
wherein rollers (20) which can be rolled on control faces (40) of the cam disc (22) are rotatably mounted on the roller carrier (2),
wherein a limiting part which is supported on the roller carrier (2) on that side of the roller carrier (2) which faces away from the armature disc, and is supported by way of a first sliding ring functions as an axial limitation of the armature disc, can be supported on that side of the armature disc which faces away from the roller carrier (2) and/or magnet body (1),
in particular can be supported by way of a second sliding ring (33),
wherein the cam disc is arranged between the roller carrier (2) and the magnet body (1),
**characterised in that**
the limiting part, screw (32) or grub screw
- has a first widened portion, nut screwed on the screw head or onto a threaded region of the limiting part, the first widened portion being able to be supported on the armature disc on that side of the armature disc which faces away from the magnet body (1), and
- has a second widened portion, nut screwed on the screw head or onto a threaded region of the limiting part, the second widened portion being able to be supported on the roller carrier (2) on that side of the roller carrier (2) which faces away from the magnet body (1).

2. A braking arrangement according to claim 1,
**characterised in that**
the cam disc (22) in the region of the control faces (40) has an axial thickness, in particular wall thickness, or surface position which has different values, in particular different axial positions, at different angle-at-circumference positions,
the axial thickness or surface position being changeable, increasing or decreasing, with, starting from a first angle-at-circumference position, in particular equilibrium position, increasing angle at circumference,

3. A braking arrangement according to one of the preceding claims,
**characterised in that**
the axial thickness, in particular wall thickness, or surface position initially increases with increasing angle at circumference, starting from an equilibrium position, in a first angle-at-circumference region and in a second angle-at-circumference region adjoining the first angle-at-circumference region, and a third angle-at-circumference region which adjoins the second angle-at-circumference region has a local minimum, in particular therefore a region of decrease and adjoining this a region of increase,
the increase in the first angle-at-circumference region being greater than in the second angle-at-circumference region.

4. A braking arrangement according to one of the preceding claims,
**characterised in that**
the axial thickness, in particular wall thickness, or surface position initially increases with decreasing angle at circumference, starting from an equilibrium position, in a fourth angle-at-circumference region and in a fifth angle-at-circumference region adjoining the fourth angle-at-circumference region, and a sixth angle-at-circumference region which adjoins the fifth angle-at-circumference region has a local minimum, in particular therefore a region of decrease and adjoining this a region of increase,
the increase in the fourth angle-at-circumference region being greater than in the fifth angle-at-circumference region.

5. A braking arrangement according to one of the preceding claims,
**characterised in that**
a lever part (6) is connected, in particular is detachably connected, to the roller carrier (2)
and/or **in that**
a cable pull is connected to the roller carrier (2), in particular for actuating the roller carrier, by pivoting a lever connected to the cable pull and pivotably mounted on a fan cowl surrounding the fan.

6. A braking arrangement according to one of claims 1 to 5,
**characterised in that**
the limiting part, screw (32) or grub screw, is detachably connected to the armature disc, in particular is screwed into a threaded bore in the armature disc,
having a widened portion, screw head, or nut screwed onto a threaded region of the limiting part, the second widened portion being able to be supported on the roller carrier (2) by way of a sliding ring (33) on that side of the roller carrier (2) which faces away from the magnet body (1).

7. A braking arrangement according to one of the preceding claims,
**characterised in that**
a fan is arranged on that side of the roller carrier (2) which faces away from the magnet body (1),
which fan is connected non-rotatably to the shaft.

8. A braking arrangement according to one of the preceding claims,
**characterised in that**
a coil is accommodated in the magnet body (1), in particular is accommodated in an indentation or cutout in the magnet body (1),
with a brake lining carrier, in particular one embodied in the manner of a perforated disc, being connectable non-rotatably, but axially movably, to the shaft,
with spring elements supported on the magnet body (1) pressing the armature disc away from the magnet body (1) and/or pressing it towards the brake lining carrier, so that the latter, when the coil is not energised, is pressed onto a braking face of the electric motor, onto a braking face formed on an end plate of the electric motor,
with, when the coil is energised, the armature disc being drawn towards the magnet body (1) counter to the spring force of the spring elements.

9. A braking arrangement according to one of the preceding claims,
**characterised in that**
the armature disc is manufactured from a ferromagnetic material, in particular from steel,
and/or **in that**
bolts (21), in particular axially oriented bolts (21), are fastened in or on the magnet body (1),
which bolts are guided through a cutout in the armature disc, such that the armature disc can be moved back and forth in the axial direction along the bolts (21).

10. A braking arrangement according to one of the preceding claims,
**characterised in that**
the limiting part projects through an elongate hole, extending in the peripheral direction, in the roller carrier (1),
the limiting part projecting through a round hole in the cam disc and in the magnet body (1),
the cam disc being detachably connected to the magnet body (1) or at least by means of the limiting part being connected in a form fit to the magnet body (1) in the peripheral direction.

11. A braking arrangement according to one of the preceding claims,
**characterised in that**
the axes of rotation of the rollers (20) are radially oriented
and/or
**in that** the first and the second sliding ring (31) are manufactured from plastics material.

12. A braking arrangement according to one of the preceding claims,
**characterised in that**
at least one screwing part screwed into a threaded bore in the magnet body (1) projects through the cam disc and the elongate hole in the roller carrier, and a restoring spring presses the roller carrier towards the cam disc and hence towards the magnet body, the restoring spring being supported on a widened portion of the screwing part, in particular on the screw head of the screwing part which is embodied as a screw, or on a nut screwed onto the screwing part which is embodied as a grub screw,
as a result of which the rollers (20) of the roller carrier (1) are pressed onto respective control faces of the cam disc, which is thereby pressed towards the magnet body (1).

13. A braking arrangement according to one of the preceding claims,
**characterised in that**
the roller carrier (1) and the cam disc are each manufactured from metal and the magnet body (1) from a ferromagnetic cast steel.

14. A braking arrangement according to one of the preceding claims,
**characterised in that**
a fan (5) is arranged next to that side of the roller carrier (2) which faces away from the magnet body (1),
and is connectable non-rotatably to the shaft.

15. An electric motor having a braking arrangement according to one of the preceding claims,
**characterised in that**
the shaft is a rotor shaft of the electric motor.

## Revendications

1. Ensemble frein destiné au freinage d'un arbre, en particulier d'un arbre de rotor d'un moteur électrique,
l'ensemble frein comprenant un disque d'induit relié, de manière solidaire en rotation mais mobile axialement, à un corps magnétique (1) de l'ensemble frein,
l'ensemble frein comprenant un porte-rouleaux (2) et un disque à cames (22),
des rouleaux (20) qu'il est possible de faire rouler sur des surfaces de commande (40) du disque à cames (22) étant montés rotatifs sur le porte-rouleaux (2),
une pièce de limitation, supportée au niveau du porte-rouleaux (2) par une première bague collectrice du côté du porte-rouleaux (2) opposé au disque d'induit, servant de délimitation axiale, pouvant être supportée du côté du disque d'induit opposé au porte-rouleaux (2) et/ou au corps magnétique (1), en particulier pouvant être supportée par une seconde bague collectrice (33),
le disque à cames étant agencé entre le porte-rouleaux (2) et le corps magnétique (1), **caractérisé en ce que**
la pièce de limitation, la vis (32) ou la tige filetée,
- présente un premier élargissement au niveau de la tête de vis ou sur une région filetée de la pièce de limitation, le premier élargissement pouvant être supporté au niveau du disque d'induit, du côté du disque d'induit opposé au corps magnétique (1), et
- présente un second élargissement au niveau de la tête de vis ou sur une région filetée de la pièce de limitation, le second élargissement pouvant être supporté au niveau du porte-rouleaux (2), du côté du porte-rouleaux (2) opposé au corps magnétique (1).

2. Ensemble frein selon la revendication 1,
**caractérisé en ce que**
le disque à cames (22) présente dans la région des surfaces de commande (40) une épaisseur axiale, en particulier une épaisseur de paroi, ou une position de surface qui, pour des positions angulaires circonférentielles différentes, présente des valeurs différentes, en particulier des positions axiales différentes,
l'épaisseur axiale ou la position de surface pouvant être modifiée, augmentée ou diminuée par l'augmentation de l'angle circonférentiel à partir d'une première position angulaire circonférentielle, en particulier à partir de la position d'équilibre.

3. Ensemble frein selon l'une quelconque des revendications précédentes,
**caractérisé en ce que**
l'épaisseur axiale, en particulier l'épaisseur de paroi, ou la position de surface augmente initialement avec l'augmentation de l'angle circonférentiel, à partir d'une position d'équilibre, dans une première plage angulaire circonférentielle et dans une deuxième plage angulaire circonférentielle adjacente à la première plage angulaire circonférentielle, et une troisième plage angulaire circonférentielle adjacente à la deuxième plage angulaire circonférentielle présente un minimum local, en particulier une plage de diminution et une plage d'augmentation lui succédant,
l'augmentation dans la première plage angulaire circonférentielle étant supérieure à l'augmentation dans la deuxième plage angulaire circonférentielle.

4. Ensemble frein selon l'une quelconque des revendications précédentes,
**caractérisé en ce que**
l'épaisseur axiale, en particulier l'épaisseur de paroi, ou la position de surface augmente initialement avec la diminution de l'angle circonférentiel, à partir d'une position d'équilibre, dans une quatrième plage angulaire circonférentielle et dans une cinquième plage angulaire circonférentielle adjacente à la quatrième plage angulaire circonférentielle, et une sixième plage angulaire circonférentielle adjacente à la cinquième plage angulaire circonférentielle présente un minimum local, en particulier une plage de diminution et une plage d'augmentation lui succédant,
l'augmentation dans la quatrième plage angulaire circonférentielle étant supérieure à l'augmentation dans la cinquième plage angulaire circonférentielle.

5. Ensemble frein selon l'une quelconque des revendications précédentes,
**caractérisé en ce que**
une pièce formant levier (6) est reliée au porte-rouleaux (2), en particulier est reliée de manière amovible,
et/ou **en ce que**
un câble de traction est relié au porte-rouleaux (2), en particulier afin d'actionner le porte-rouleaux en faisant pivoter un levier relié au câble de traction et monté pivotant sur un capot de ventilateur entourant le ventilateur.

6. Ensemble frein selon l'une quelconque des revendications 1 à 5,
**caractérisé en ce que**
la pièce de limitation, la vis (32) ou la tige filetée, est reliée de manière amovible au disque d'induit, en particulier est vissée dans un alésage fileté du disque d'induit,
un élargissement présentant une tête de vis ou un écrou vissé sur une région filetée de la pièce de limitation, le second élargissement pouvant être supporté au niveau du porte-rouleaux (2) par une bague collectrice (33), du côté du porte-rouleaux (2) opposé au corps magnétique (1).

7. Ensemble frein selon l'une quelconque des revendications précédentes,
**caractérisé en ce que**
un ventilateur relié de manière solidaire en rotation à l'arbre est agencé du côté du porte-rouleaux (2) opposé au corps magnétique (1).

8. Ensemble frein selon l'une quelconque des revendications précédentes,
**caractérisé en ce que**
une bobine est logée dans le corps magnétique (1), en particulier dans un renfoncement ou un évidement du corps magnétique (1),
un support de garniture de frein, en particulier de type disque perforé, pouvant être relié à l'arbre de manière solidaire en rotation mais mobile axialement,
des éléments de ressort supportés au niveau du corps magnétique (1) éloignant le disque d'induit du corps magnétique (1) et/ou poussant le disque d'induit vers le support de garniture de frein, de sorte que celui-ci est pressé sur une surface de freinage du moteur électrique, à savoir une surface de freinage formée au niveau d'une plaque de roulement du moteur électrique, lorsque la bobine n'est pas alimentée en courant,
le disque d'induit étant tiré vers le corps magnétique (1) à l'encontre de la force de ressort des éléments de ressort lorsque la bobine est alimentée en courant,

9. Ensemble frein selon l'une quelconque des revendications précédentes,
**caractérisé en ce que**
le disque d'induit est réalisé en un matériau ferromagnétique, en particulier en acier, et/ou **en ce que**
des boulons (21) mis en oeuvre grâce un évidement du disque d'induit de sorte que le disque d'induit peut être déplacé en va-et-vient dans la direction axiale le long du boulon (21), en particulier des boulons (21) orientés axialement, sont fixés dans ou sur le corps magnétique (1).

10. Ensemble frein selon l'une quelconque des revendications précédentes,
**caractérisé en ce que**
la pièce de limitation traverse un trou oblong, s'étendant dans la direction circonférentielle, du porte-rouleaux (1),
la pièce de limitation traversant un trou rond du disque à cames et du corps magnétique (1),
le disque à cames étant relié de manière amovible au corps magnétique (1) ou étant relié par complémentarité de forme au corps magnétique (1) dans la direction circonférentielle au moins au moyen de la pièce de limitation.

11. Ensemble frein selon l'une quelconque des revendications précédentes,
**caractérisé en ce que**
les axes de rotation des rouleaux (20) sont orientés radialement
et/ou **en ce que**
les première et seconde bagues collectrices (31) sont réalisées en plastique.

12. Ensemble frein selon l'une quelconque des revendications précédentes,
**caractérisé en ce que**
au moins une pièce filetée vissée dans un alésage fileté du corps magnétique (1) traverse le disque à cames et le trou oblong du porte-rouleaux, et un ressort de rappel pousse le porte-rouleaux vers le disque à cames et donc vers le corps magnétique,
le ressort de rappel étant supporté au niveau d'un élargissement de la pièce filetée, en particulier au niveau de la tête de vis de la pièce filetée réalisée sous forme de vis ou au niveau d'un écrou vissé sur la pièce filetée réalisée sous forme de tige filetée, grâce à quoi les rouleaux (20) du porte-rouleaux (1) sont pressés sur des surfaces de commande respectives du disque à cames, qui est ainsi pressé vers le corps magnétique (1).

13. Ensemble frein selon l'une quelconque des revendications précédentes,
**caractérisé en ce que**
le porte-rouleaux (1) et le disque à cames sont réalisés respectivement en métal et le corps magnétique (1) est en fonte d'acier ferromagnétique.

14. Ensemble frein selon l'une quelconque des revendications précédentes,
**caractérisé en ce que**
un ventilateur (5) est agencé à proximité du côté du porte-rouleaux (2) opposé au corps magnétique (1) et peut être relié de manière solidaire en rotation à l'arbre.

15. Moteur électrique comprenant un ensemble frein selon l'une quelconque des revendications précédentes,
**caractérisé en ce que**
l'arbre est un arbre de rotor du moteur électrique.
